# EUROPEAN PATENT SPECIFICATION

(11) **EP 2 685 115 B1**
(45) Date of publication and mention of the grant of the patent: **13.05.2015**
(21) Application number: 13175665.2
(22) Date of filing: 09.07.2013
(51) Int. Cl.: F16C 19/36, F16C 33/51, F16C 43/04

(54) **Jig for split cage and method of assembling rolling bearing**
Spannvorrichtung für einen geteilten Käfig und Verfahren zum Zusammenbau des Rollenlagers
Gabarit pour cage fendue et procédé d'assemblage d'un palier à roulement

(30) Priority: 12.07.2012 JP 2012156637
(43) Date of publication of application: 15.01.2014
(73) Proprietor: JTEKT CORPORATION, Osaka-shi Osaka 542-8502 (JP)
(72) Inventor: Miyachi, Takeshi, Osaka-shi, Osaka 542-8502 (JP)
(74) Representative: Winter, Brandl, Fürniss, Hübner, Röss, Kaiser, Polte - Partnerschaft mbB

(56) References cited:
- WO-A1-2011/080961
- DE-A1-102009 006 860
- GB-A- 2 104 600
- JP-A- 2007 239 948
- US-A- 2 782 080
- US-A- 5 911 301

## Description

The present invention relates to a jig for a split cage configured by annularly arranging a plurality of cage segments, and relates to a method of assembling a rolling bearing.

In conventional horizontal axis propeller type wind power generation apparatuses, rolling bearings are used to rotatably support a main shaft to which blades are attached. In recent years, since the sizes of the wind power generation apparatuses are increased, the diameter of the main shaft may exceed several meters. In order to support such a large-sized main shaft, the size of the rolling bearing is also increased. A cage formed of synthetic resin may be used for such a large-sized rolling bearing. The synthetic resin cage is advantageous over a metallic cage assembled by welding in that the synthetic resin cage is light in weight and a sufficient accuracy of the synthetic resin cage is easily achieved. However, it is difficult to integrally form a synthetic resin cage having a large diameter by injection molding. Thus, a split cage that is circumferentially split into a plurality of cage segments is used (e.g., see EP Patent No. 2264325 A1). The split cage is configured by annularly arranging the cage segments.

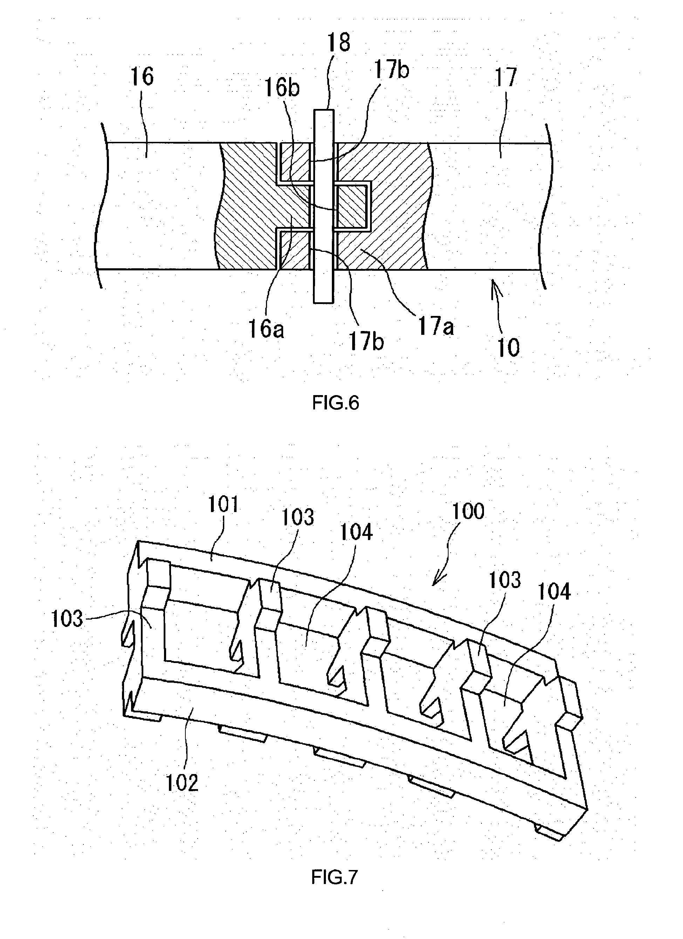

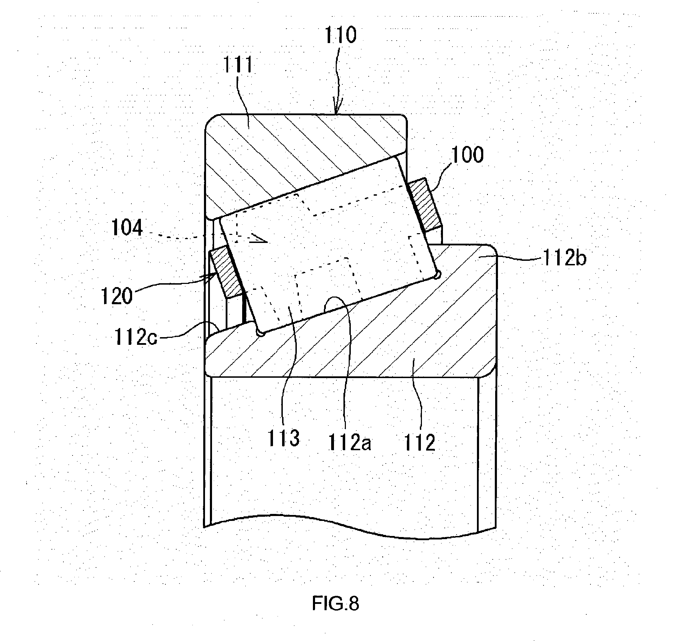

FIG. 7 is a perspective view illustrating an example of a cage segment. FIG. 8 is a sectional view illustrating a tapered roller bearing including a split cage. In FIG. 7, a cage segment 100 includes a pair of first rim portion 101 and second rim portion 102, and a plurality of bar portions 103. The first rim portion 101 and the second rim portion 102 are spaced from each other by a predetermined interval and face each other. The bar portions 103 are formed so as to extend from the first rim portion 101 to the second rim portion 102. In the cage segment 100, spaces, each of which is surrounded by the bar portions 103 adjacent to each other and the first and second rim portions 101 and 102, are formed as pockets 104 that house a plurality of tapered rollers 113 (refer to FIG. 8).

In FIG. 8, in a tapered roller bearing 110, the tapered rollers 113 are arranged between an outer ring 111 and an inner ring 112. The tapered rollers 113 are retained by a split cage 120 that is formed of the cage segments 100 (refer to FIG. 7). A raceway surface 112a on which the tapered rollers 113 roll is formed on the outer periphery of the inner ring 112. A large rib portion 112b and a small rib portion 112c are provided on respective opposite sides of the raceway surface 112a in an axial direction, and end faces of each tapered roller 113 contact the large rib portion 112b and the small rib portion 112c, respectively.

In order to provide the tapered roller bearing 110 in a housing of the wind power generation apparatus, the cage segments 100 are arranged annularly along the outer periphery of the inner ring 112. Then, in a state in which the tapered rollers 113 are provided in the pockets 104 of the cage segments 100, the inner ring 112 is fitted, together with the cage segments 100 and the tapered rollers 113, into the outer ring 111 fitted to the housing.

The cage segments 100 are annularly arranged along the outer periphery of the inner ring 112, and the inner ring 112 is fitted, together with the cage segments 100 and the tapered rollers 113, into the outer ring 111 fitted to the housing, in the state in which the tapered rollers 113 are retained by the cage segments 100. At this stage, since the cage segments 100 are separated from each other, it is necessary to prevent the cage segments 100 and the tapered rollers 113 from coming off from the inner ring 112. Thus, it is difficult to perform the above-described process, and as a result, it takes much man-hours to assemble the tapered roller bearing 110.
A jig, and use of a jig for assembling a split cage, having the features of the preamble of claim 1, a jig with a split cage having the features of the preamble of claim 2 and a method of assembling a rolling bearing according to the preamble of claim 5 are known from WO 2011/080961 A1.

An object of the present invention is to provide a jig for a split cage, which facilitates the assembly of a rolling bearing including a split cage configured by annularly arranging a plurality of cage segments, and an assembling method that facilitates the assembly of a rolling bearing including such a split cage.
The object of the invention is achieved by means of a jig having the features of claim 1, a jig with a split cage having the features of claim 2, a method of assembling a rolling bearing according to claim 5 and the use of a jig for assembling a split cage according to claim 7. Further advantageous developments are subject-matter of the dependent claims.

The foregoing and further features and advantages of the invention will become apparent from the following description of example embodiments with reference to the accompanying drawings, wherein like numerals represent like elements, and wherein:
FIG. 1 is a sectional view illustrating a rolling bearing;
FIG. 2 is a schematic view illustrating a cage for the rolling bearing, as seen in an axial direction;
FIG. 3 is a perspective view illustrating one of cage segments which constitute a split cage;
FIG. 4 is a sectional view illustrating an inner ring, a tapered roller, a split cage and a band;
FIG. 5 is an explanatory view illustrating the looped band as seen in the axial direction;
FIG. 6 is an explanatory view illustrating connecting portions of band segments, which are connected by a connecting pin;
FIG. 7 is a perspective view illustrating an example of a cage segment; and
FIG. 8 is a sectional view illustrating a tapered roller bearing including a split cage.

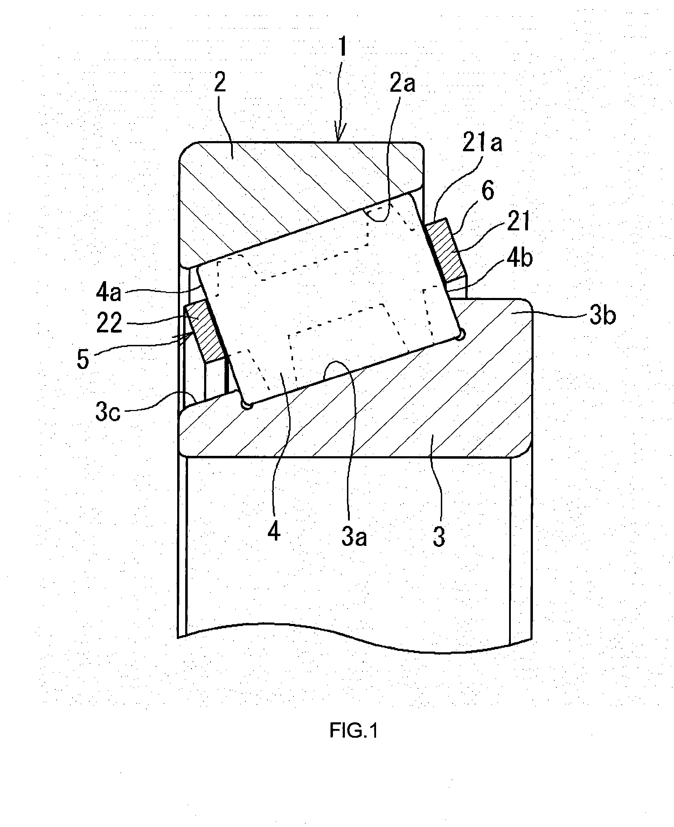

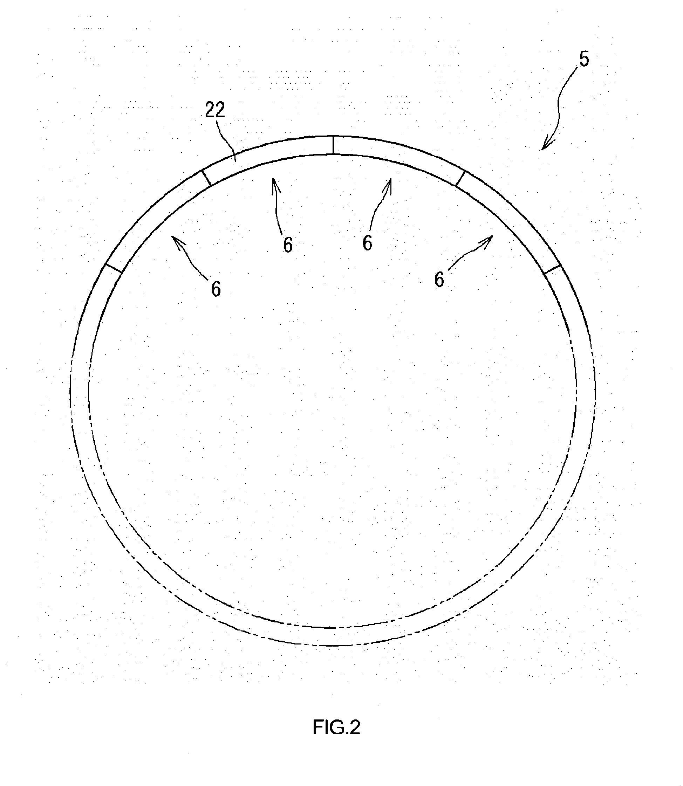

Hereinafter, embodiments of the present invention will be described. FIG. 1 is a sectional view illustrating a rolling bearing. FIG. 2 is a schematic view illustrating a cage for the rolling bearing as seen in an axial direction. The rolling bearing shown in FIG. 1 is a tapered roller bearing 1 including a plurality of tapered rollers 4 as rolling elements. The tapered roller bearing 1 is a large-sized tapered roller bearing used to support a main shaft of a wind power generation apparatus. The tapered roller bearing 1 includes an outer ring 2, an inner ring 3, the tapered rollers 4 and the cage. The tapered rollers 4 are interposed between the outer ring 2 and the inner ring 3. The cage holds the tapered rollers 4 at circumferentially equal intervals. As shown in FIG. 2, the cage is a split cage 5 that is circumferentially split into a plurality of segments. Namely, the split cage 5 is formed of a plurality of cage segments 6.

Referring to FIG. 1, an outer raceway surface 2a on which the tapered rollers 4 roll is formed on the inner periphery of the outer ring 2. An inner raceway surface 3a on which the tapered rollers 4 roll is formed on the outer periphery of the inner ring 3, at a position facing the outer raceway surface 2a. On the outer peripheral portion of the inner ring 3, a large rib portion 3b and a small rib portion 3c are formed on respective opposite sides of the inner raceway surface 3a in the axial direction. The large rib portion 3b and the small rib portion 3c protrude radially outward. The small rib portion 3c and the large rib portion 3b contact axially opposite end faces 4a, 4b of each tapered roller 4, respectively.

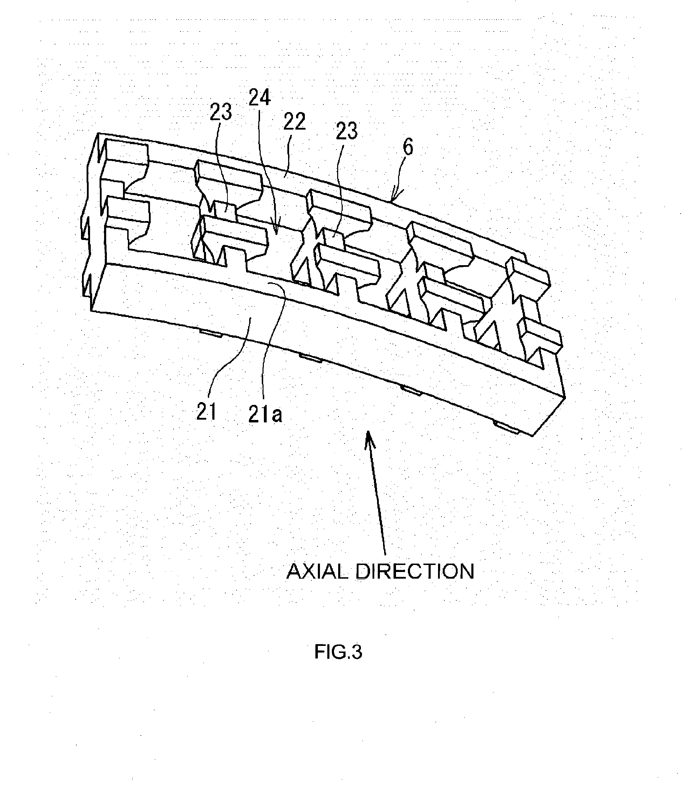

FIG. 3 is a perspective view illustrating one of the cage segments 6 that constitute the split cage 5. Each of the cage segments 6 has an arc shape as a whole, as seen in the axial direction. The split cage 5 having an annular shape is configured by annularly arranging the cage segments 6 in a circumferential direction (refer to FIG. 2).

Each of the cage segments 6 includes a first rim portion 21, a second rim portion 22, and a plurality of bar portions 23. The first rim portion 21 and the second rim portion 22 are spaced from each other by a predetermined interval in the axial direction, and face each other. The bar portions 23 are formed so as to extend from the first rim portion 21 to the second rim portion 22. Spaces, each of which is surrounded by the two bar portions 23 adjacent to each other and the first and second rim portions 21 and 22, are formed as pockets 24 that house the tapered rollers 4 (refer to FIG. 1). In each cage segment 6, the pockets 24 are formed in the circumferential direction (i.e., the circumferential direction of the arc). Each cage segment 6 is made of synthetic resin, and is integrally formed by injection molding.

The split cage 5 is a cage of an external holding type. The tapered rollers 4 can be housed in the pockets 24 by inserting the tapered rollers 4 from the radial inside of the split cage 5 (cage segments 6), and the tapered rollers 4 cannot be inserted from the radial outside of the split cage 5. This is because lug portions, which can make contact with the tapered rollers 4 in the pockets 24, are formed on the outer peripheral side of the split cage 5 (cage segments 6), as shown in FIG. 3. Accordingly, the lug portions make contact with the tapered rollers 4 from the radial outside, in a state in which the tapered rollers 4 arranged along the outer periphery of the inner ring 3 are housed in the pockets 24 of the split cage 5 (cage segments 6) provided on the outer peripheral side of the inner ring 3. Thus, it is possible to restrain the tapered rollers 4 from coming off toward radially outward. Namely, the tapered rollers 4 can be restricted from being moved radially outward of the split cage 5 (cage segments 6).

Further, as shown in FIG. 1, the split cage 5 is a cage for retaining the tapered rollers 4. Namely, the first rim portions 21 among the first and second rim portions 21, 22 have a diameter lager than that of the second rim portions 22 in the split cage 5 assembled by annularly arranging the cage segments 6. The first rim portions 21 have an outer peripheral surface 21a that is a conical surface whose diameter decreases toward the second rim portions 22.

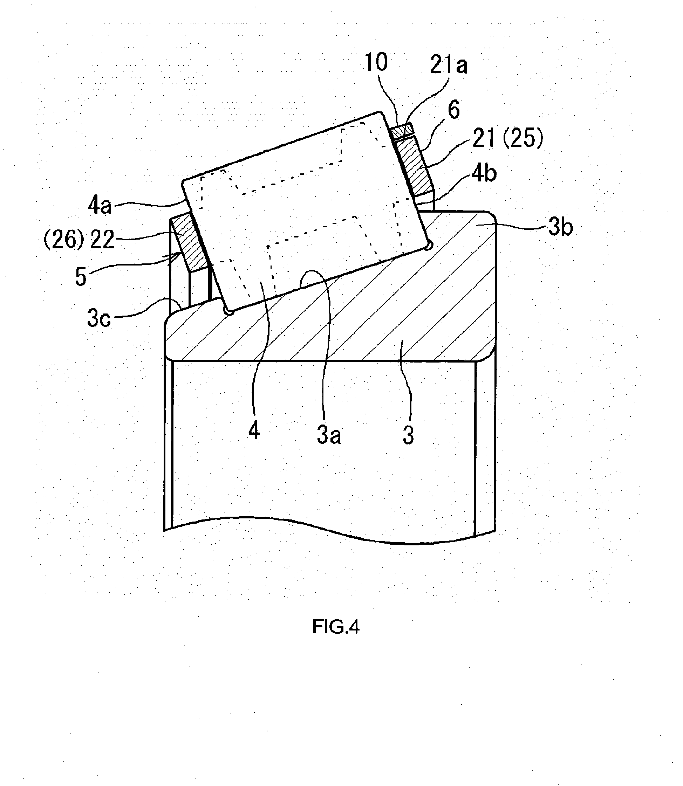

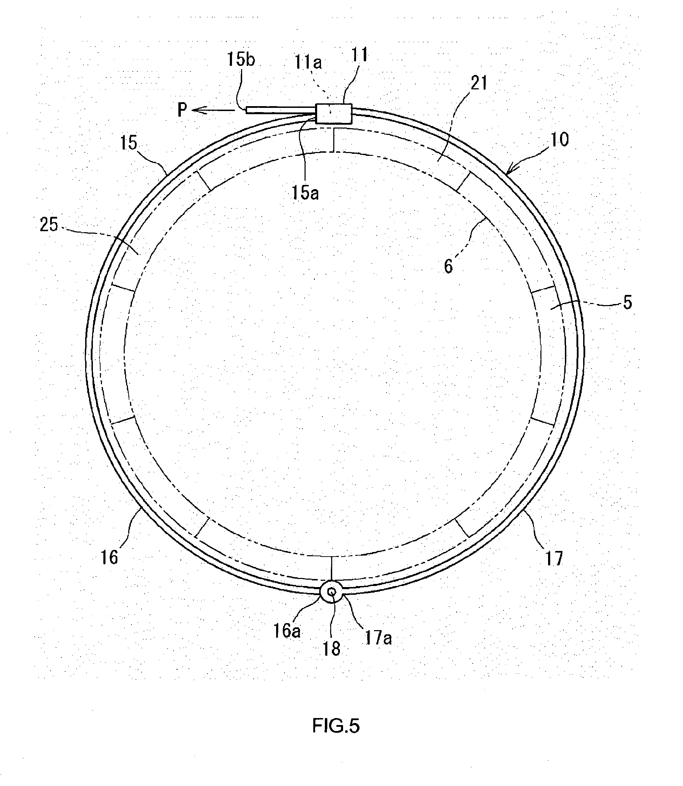

When the tapered roller bearing 1 including the split cage 5 having the above-described configuration is assembled, there is a possibility that the cage segments 6 may be separated from each other. Thus, during assembling of the tapered roller bearing 1, a jig for the split cage 5 is used. As shown in FIG. 4 and FIG. 5, the jig is a looped band 10 that is wound on the outer peripheral side of the first rim portions 21 of the cage segments 6 that are annularly arranged. FIG. 4 is a sectional view illustrating the inner ring 3, the tapered roller 4, the split cage 5 and the band 10. FIG. 5 is an explanatory view illustrating the looped band 10, as seen in the axial direction. It is noted that each of the rim portions 21 (22) has an arc shape, and accordingly, when the cage segments 6 are annularly arranged in the circumferential direction, these rim portions 21 (22) constitute a single annular rim 25 (26).

The band 10 will be described. The band 10 is formed of a belt-shaped member having a width that is equal to or slightly smaller than the width (axial dimension) of the first rim portions 21. In this embodiment, the band 10 is made of a metal, and is bent in a looped shape as a whole. The band 10 has a lock portion 11 that is able to adjust a loop length of the band 10 with respect to an outer peripheral length of the first rim portions 21 (rim 25), and that is able to fix the adjusted loop length.

The lock portion 11 is provided at one end portion 15a of a band body 15. A hole 11a is formed in the lock portion 11. The band body 15 is inserted through the hole 11a from the other end 15b. A lug (not shown) is formed in the hole 11a. Further, an engagement portion that is engaged with the lug is formed in the other end portion 15b-side of the band body 15. Thus, the band body 15 can be moved with respect to the lock portion 11 in one direction (direction indicated by an arrow P in FIG. 5) in which the other end portion 15b inserted through the lock portion 11 can be further pulled, but movement of the band 10 in the other direction (opposite direction) is restricted. Namely, this band 10 (lock portion 11) is constituted as an ordinary fastening band. Thus, by inserting the band body 15 through the lock portion 11 from the other end portion 15b, the loop length of the band 10 can be adjusted to any given loop length. Then, by engaging the engagement portion with the lug at any given loop length, the loop length is fixed.

Thus, the band body 15 is disposed along the outer periphery of the rim 25 of the split cage 5 in a state in which the cage segments 6 are annularly arranged. By pulling the other end portion 15b of the band body 15 passed through the lock portion 11, the rim 25 of the split cage 5 can be fastened radially inward by the band 10.

As described above, the assembled state of the split cage 5, that is, the state of the split cage 5 assembled by annularly arranging the cage segments 6 is maintained, by winding the band 10 on the outer peripheral side of the first rim portions 21 of the cage segments 6 (the rim 25 of the split cage 5). Further, the split cage 5 is fastened with the band 10 by adjusting the loop length of the band 10 with the use of the lock portion 11 in accordance with the outer peripheral length of the first rim portions 21 (rim 25). Thus, it is possible to effectively prevent the cage segments 6 from being separated from each other, and therefore, it is possible to maintain the integrity of the split cage 5 including the cage segments 6.

Further, as shown in FIG. 4, in the split cage 5 configured by annularly arranging the cage segments 6, the first rim portions 21 have a diameter larger than that of the second rim portions 22, and the first rim portions 21 have the outer peripheral surface that is a conical surface whose diameter decreases toward the second rim portions 22, as described above. Accordingly, in this embodiment, the band 10 is wound on only the outer peripheral side of the first rim portions 21 (rim 25) having a larger diameter. Thus, the band 10 is unlikely to come off from the split cage 5. That is, when the band 10 is tightened on the first rim portions 21 (rim 25) in the state in which the tapered rollers 4 are retained by the split cage 5, the band 10 tends to be displaced toward the axial one side (left side in the case shown in FIG. 4). However, the positional displacement of the band 10 is prevented by the end faces 4b of the tapered rollers 4. Positional deviation toward the axial other side (right side in the case shown in FIG. 4) is also restricted since the first rim portions 21 (rim 25) have a diameter that increases toward an end portion. Thus, the band 10, which is wound on the outer peripheral side of the first rim portions 21 having a larger diameter, is unlikely to come off from the split cage 5.

Further, as shown in FIG. 5, the band body 15 is formed of a plurality of belt-shaped band segments that is circumferentially arranged. In this embodiment, the band 10 includes two band segments, that is, a first band segment 16 and a second band segment 17 that are circumferentially arranged. The band 10 further includes a connecting member that is able to connect the band segments 16, 17 that are circumferentially adjacent to each other. This connecting member is removable from these band segments 16, 17. The connecting member in this embodiment is composed of a connecting pin 18. As shown in FIG. 6, holes 16b, 17b, through which the connecting pin 18 is inserted, are formed respectively in end portions 16a, 17a of the band segments 16, 17. Connecting portions of the band segments 16, 17, which are connected to each other by the connecting pin 18, may be located at any position in an intermediate portion of the band body 15. In this embodiment, as shown in FIG. 5, the connecting portions are located at a position that is circumferentially spaced from the lock portion 11 by an angle of about 180 degrees.

In a state in which the connecting pin 18 is inserted in both of the holes 16b, 17b, the band segments 16, 17 are connected to each other. However, when the connecting pin 18 is removed from the holes 16b, 17b, the band segments 16, 17 are disconnected from each other. The connecting pin 18 is pulled from the holes 16b, 17b, in its longitudinal direction that coincides with the axial direction of the tapered rollers 4. The function of the connecting pin 18 will be explained later in the description of a method of assembling a tapered roller bearing.

Description will be hereinafter made as to the method of assembling the tapered roller bearing 1 including the split cage 5 formed of the cage segments 6, and configured as described above, with the use of the jig (band 10) according to this embodiment.

As shown in FIG. 4, the tapered rollers 4 arranged on the outer peripheral side (inner raceway surface 3a) of the inner ring 3 are retained by the split cage 5 in which the cage segments 6 are annularly arranged along the outer periphery of the inner ring 3, and further, with the use of the band 10, the cage segments 6 of the split cage 5 are prevented from being separated from each other (first step). It is noted that, in this first step, at first, the tapered rollers 4 are arranged on the inner raceway surface 3a of the inner ring 3, and then the split cage 5 is disposed along the outer periphery of the inner ring 3 so that the tapered rollers 4 are housed in the pockets 24, and the split cage 5 is fastened by the band 10.

In this first step, the band 10 is wound on the outer peripheral side of the first rim portions 21 (rim 25) of the cage segments 6 that are annularly arranged along the outer periphery of the inner ring 3, as shown in FIG. 5, and the loop length of the band 10 is adjusted by the lock portion 11 with respect to the outer peripheral length of the first rim portions 21 (rim 25), and the adjusted loop length is fixed by the lock portion 11. Since the loop length of the band 10 is adjusted in accordance with the outer peripheral length of the first rim portions 21 (rim 25), the split cage 5 is fastened by the band 10. Therefore, it is possible to prevent the cage segments 6 and the tapered rollers 4 from being separated from each other, and thus it is possible to maintain the split cage 5 in the annular shape. As a result, a semi-finished product, which is formed of the inner ring 3, the tapered rollers 4 and the split cage 5, is obtained as an integrated unit, as shown in FIG. 4.

Next, in a second step, the outer ring 2 is caused to externally contact the tapered rollers 4 retained by the split cage 5. Namely, the semi-finished product formed of the inner ring 3, the tapered rollers 4 and the split cage 5 is fitted in the outer ring 2. The process of fitting the inner ring 3, the tapered rollers 4 and the split cage 5 in the outer ring 2 can be easily performed, since the inner ring 3, the tapered rollers 4 and the split cage 5 have been integrated to form an integrated unit in the first step. Further, in the second step, after the outer ring 2 is caused to externally contact the tapered rollers 4, the connecting pin 18 (refer to FIG. 6) inserted in the band 10 is pulled and removed from the band segments 16, 17. As a result, the band segments 16, 17 are disconnected from each other, and accordingly, the connecting portions of the band segments 16, 17 are separated from each other. Thus, it is possible to easily remove the band 10 from the split cage 5 without disengaging the engagement portion, which is engaged with the lug in the lock portion 11, from the lug.

As described above, with the jig for the split cage 5 according to this embodiment, it is possible to prevent the cage segments 6 from being separated from each other, and accordingly, it is possible to ensure the integrity of the split cage 5 including the cage segments 6. According to the method of assembling the tapered roller bearing 1 by using the jig (band 10), it is possible to prevent the cage segments 6 from being separated from each other, and accordingly, it is possible to maintain the split cage 5 in the annular shape. Further, since the semi-finished product formed of the inner ring 3, the tapered rollers 4 and the split cage 5 is obtained as an integrated unit, the process of fitting the semi-finished product obtained as an integrated unit (the inner ring 3, the tapered rollers 4 and the split cage 5) in the outer ring 2 can be easily performed. Namely, a process of fitting the tapered roller bearing between a main shaft and a housing is performed as follows. The semi-finished product, in which the tapered rollers 4 are disposed in the pockets 24 of the cage segments 6 annularly arranged along the outer periphery of the inner ring 3, is obtained, and the inner ring 3 of the semi-finished product is fitted to an outer periphery of the main shaft, and then, the semi-finished product is fitted in the outer ring 2 that has been fitted in the housing. However, with the use of the jig according to the embodiments, it is possible to prevent the cage segments 6 and the like from being separated from each other, and thus, it is possible to obtain the semi-finished product as an integrated unit. Accordingly, the process of fitting the tapered roller bearing in a device including a main shaft and a housing can be easily performed.

The configuration of the jig for the split cage 5 according to the present invention is not limited to the configuration shown in the accompanying drawings, and the jig for the split cage 5 may have other configurations in the scope of the present invention. For example, the lock portion 11 of the band 10 may have a configuration other than the configuration shown in the accompanying drawings. Further, in the above-mentioned embodiment, explanation has been made as to the case where the tapered roller bearing is employed as a rolling bearing. However, the present invention may be also applied to the case where a cylindrical roller bearing is employed. In this case as well, the jig (band 10) as described above can be used.

With the use of the jig for the split cage according to the present invention, the cage segments and the rolling elements can be prevented from being separated from each other, and the inner ring, the split cage and the rolling elements can be integrated to form an integrated unit. Since this integrated unit is fitted in the outer ring, the assembly of a rolling bearing is facilitated. In the method of assembling the rolling bearing according to the present invention, the cage segments can be prevented from being separated from each other, and accordingly, the split cage can be maintained in the annular shape. Thus, the inner ring, the rolling elements and the split cage can be integrated to form an integrated unit. Thus, the process of fitting the inner ring, the rolling elements and the split cage, which have been integrated to form the integrated unit, in the outer ring can be easily performed.

## Claims

1. Jig for assembling a split cage (5) of external holding type, the split cage having a plurality of cage segments (6) wherein each of the cage segments includes a rim portion (21, 22),
**characterized in that** the jig comprises
a looped band (10) to be wound on an outer peripheral side of the rim portion (21, 22) of the cage segments (6) that are annularly arranged, wherein
the looped band (10) includes:
a lock portion (11) that is able to adjust a loop length of the band (10) with respect to an outer peripheral length of the rim portion (21, 22) and that is able to fix the adjusted loop length;
a plurality of belt-shaped band segments (16, 17) that is circumferentially arranged, and
a connecting member (18) that is able to connect the band segments (16, 17) circumferentially adjacent to each other, and that is removable from the band segments.

2. Ajig with a split cage (5) of external holding type that is configured by annularly arranging a plurality of cage segments (6) in a circumferential direction,
wherein each of the cage segments (6) includes
a pair of first (21) and second (22) rim portions spaced from each other by a predetermined interval and facing each other, and
a plurality of bar portions (23) extending from the first rim portion (21) to the second rim portion (22), wherein spaces, each of which is surrounded by the bar portions (23) adjacent to each other and the pair of first (21) and second (22) rim portions, are formed as pockets that house rolling elements (4), and wherein the split cage (5) restricts radially outward movement of the rolling elements (4) housed in the pockets,
**characterized in that** the jig comprises
a looped band (10) wound on an outer peripheral side of the first rim portions (21) or the second rim portions (22) of the cage segments (6) that are annularly arranged,
wherein the band (10) includes a lock portion (11) that is able to adjust a loop length of the band (10) with respect to an outer peripheral length of the first rim portions (21) or the second rim portions, and that is able to fix the adjusted loop length.

3. The jig with the split cage according to claim 2, wherein the band (10) further includes a plurality of belt-shaped band segments (16, 17) that is circumferentially arranged, and a connecting member (18) that is able to connect the band segments (16, 17) circumferentially adjacent to each other, and that is removable from the band segments.

4. The jig with the split cage (5) according to claim 2 or 3, wherein the first rim portions (21) have a diameter larger than that of the second rim portions (22), the first rim portions (21) have an outer peripheral surface that is a conical surface whose diameter decreases toward the second rim portions (22), the split cage (5) is for retaining the rolling elements (4) composed of tapered rollers (4), and the band (10) is wound on only an outer peripheral side of the first rim portions (21).

5. A method of assembling a rolling bearing (1) including an inner ring (3), an outer ring (2), a plurality of rolling elements (4) interposed between the inner ring (3) and the outer ring (2), and a cage that retains the rolling elements (4), wherein the cage is composed of a split cage (5) of external holding type that is configured by annularly arranging a plurality of cage segments (6) in a circumferential direction, wherein each of the cage segments (6) includes a pair of first (21) and second (22) rim portions spaced from each other by a predetermined interval and facing each other, and a plurality of bar portions (23) extending from the first rim portion (21) to the second rim portion (22), wherein spaces, each of which is surrounded by the bar portions (23) adjacent to each other and the pair of first (21) and second (22) rim portions, are formed as pockets that house the rolling elements (4), and wherein the split cage (5) restricts radially outward movement of the rolling elements (4) housed in the pockets, the method comprising:
retaining the rolling elements (4) arranged on an outer peripheral side of the inner ring (3), by using the split cage (5) in which the cage segments (6) are annularly arranged along an outer periphery of the inner ring (3), and preventing the cage segments (6) of the split cage (5) from being separated from each other, by using a looped band (10) comprising a lock portion (11); and
causing the outer ring (2) to externally contact the rolling elements (4) retained by the split cage (5),
**characterized in that** the looped band (10) is wound on an outer peripheral side of the first rim portions (21) or the second rim portions (22) of the cage segments (6) annularly arranged along the outer periphery of the inner ring (3), and, by means of the lock portion (11), a loop length of the band (10) is adjusted with respect to an outer peripheral length of the first rim portions (21) or the second rim portions and the adjusted loop length is fixed.

6. The method of assembling the rolling bearing according to claim 5, wherein the band (10) includes a plurality of belt-shaped band segments (16, 17) that is circumferentially arranged, and the band segments (16, 17) circumferentially adjacent to each other are connected by a connecting member (18), and wherein after the outer ring (2) is caused to externally contact the rolling elements (4), the connecting member is removed from the band segments (16, 17) so as to remove the band (10) from the split cage (5).

7. Use of a jig according to claim 1 for assembling a split cage (5).

## Patentansprüche

1. Montagevorrichtung zum Zusammensetzen eines geteilten Käfigs (5) vom externen Haltetyp, der eine Vielzahl an Käfigteilstücken (6) hat, wobei jedes der Käfigteilstücke einen Randabschnitt (21, 22) aufweist,
**dadurch gekennzeichnet, dass** die Montagevorrichtung
ein geschlungenes Band (10) umfasst, welches um eine äußere Umfangsseite des Randabschnitts (21, 22) der Käfigteilstücke (6), die ringförmig angeordnet sind, gewunden ist, wobei das geschlungene Band (10)
einen Arretierungsabschnitt (11), der eine Schlaufenlänge des Bands (10) hinsichtlich einer äußeren Umfangslänge des Randabschnitts (21, 22) anpassen und die angepasste Schlaufenlänge fixieren kann;
eine Vielzahl an gürtelförmigen Bandteilstücken (16, 17), die umlaufend angeordnet sind, und
ein Verbindungsteil (18) umfasst, das die Bandteilstücke (16, 17) miteinander, umlaufend aneinandergrenzend verbinden kann und von den Bandteilstücken entfernbar ist.

2. Montagevorrichtung mit einem geteilten Käfig (5) vom externen Haltetyp, der durch ringförmiges Anordnen einer Vielzahl an Käfigteilstücken (6) in einer Umfangsrichtung ausgebildet ist, wobei
jedes der Käfigteilstücke (6)
ein Paar aus ersten (21) und zweiten (22) Randabschnitten, die voneinander in vorbestimmten, gleichmäßigen Abständen getrennt und einander gegenüberliegend angeordnet sind, und
eine Vielzahl an Stegabschnitten (23) aufweist, die sich von dem ersten Randabschnitt (21) zu dem zweiten Randabschnitt (22) erstrecken, wodurch Räume, von denen jeder von aneinandergrenzenden Stegabschnitten (23) und dem Paar aus ersten (21) und zweiten (22) Randabschnitten umgeben ist, als Taschen ausgebildet sind, welche Wälzkörper (4) aufnehmen, und wobei der geteilte Käfig (5) eine Radialbewegung der in den Taschen aufgenommenen Wälzkörper (4) nach außen beschränkt,
**dadurch gekennzeichnet, dass** die Montagevorrichtung
ein geschlungenes Band (10) aufweist, das um eine äußere Umfangsseite der ersten Randabschnitte (21) oder der zweiten Randabschnitte (22) der ringförmig angeordneten Käfigteilstücke (6) gewunden ist, wobei
das Band (10) einen Arretierungsabschnitt (11) umfasst, der eine Schlaufenlänge des Bands (10) hinsichtlich einer äußeren Umfangslänge der ersten Randabschnitte (21) oder der zweiten Randabschnitte (22) anpassen und die angepasste Schlaufenlänge fixieren kann.

3. Montagevorrichtung mit dem geteilten Käfig gemäß Anspruch 2, wobei das Band (10) ferner eine Vielzahl an gürtelförmigen, umlaufend angeordneten Bandteilstücken (16, 17), und ein Verbindungsteil (18) umfasst, das die Bandteilstücke (16, 17) miteinander, umlaufend aneinandergrenzend verbinden kann und von den Bandteilstücken entfernbar ist.

4. Montagevorrichtung mit dem geteilten Käfig (5) gemäß Anspruch 2 oder 3, wobei die ersten Randabschnitte (21) einen Durchmesser aufweisen, der größer ist als der der zweiten Randabschnitte (22), die ersten Randabschnitte (21) eine äußere Umfangsoberfläche aufweisen, welche eine konische Oberfläche ist, deren Durchmesser in Richtung der zweiten Randabschnitte (22) abnimmt, der geteilte Käfig (5) die Wälzkörper (4), die aus Kegelrollen (4) bestehen, festhält, und das Band (10) nur um eine äußere Umfangsseite der ersten Randabschnitte (21) gewunden ist.

5. Verfahren zum Zusammensetzen eines Wälzlagers (1) mit einem Innenring (3), einem Außenring (2), einer Vielzahl an Wälzkörpern (4), die zwischen dem Innenring (3) und dem Außenring (2) eingefügt sind, und einem Käfig, der die Wälzkörper (4) festhält, wobei der Käfig aus einem geteilten Käfig (5) vom externen Haltetyp besteht, der durch ringförmiges Anordnen einer Vielzahl an Käfigteilstücken (6) in Umfangsrichtung ausgebildet ist, worin jedes der Käfigteilstücke (6) ein Paar aus ersten (21) und zweiten (22) Randabschnitten, die in regelmäßigen, vorbestimmten Abständen getrennt voneinander und einander gegenüberliegend angeordnet sind, und eine Vielzahl an Stegabschnitten (23) aufweist, die sich von dem ersten Randabschnitt (21) zu dem zweiten Randabschnitt (22) erstrecken, wodurch Räume, von denen jeder von aneinandergrenzenden Stegabschnitten (23) und dem Paar aus ersten (21) und zweiten (22) Randabschnitten umgeben ist, als Taschen ausgebildet sind, die die Wälzkörper (4) aufnehmen, und wobei der geteilte Käfig (5) eine Radialbewegung der in den Taschen aufgenommenen Wälzkörper (4) nach außen beschränkt, wobei das Verfahren
das Festhalten der Wälzkörper (4), die auf einer äußeren Umfangsseite des Innenrings (3) angeordnet sind, unter Verwendung des geteilten Käfigs (5), in dem die Käfigteilstücke (6) ringförmig entlang einer äußeren Peripherie des Innenrings (3) angeordnet sind, und das Verhindern, dass die Käfigteilstücke (6) des geteilten Käfigs (5) voneinander getrennt werden, durch Nutzung eines, einen Arretierungsabschnitt (11) aufweisenden geschlungenen Bands (10) umfasst; und
bewirkt, dass der Außenring (2) die Wälzkörper (4), die durch den geteilten Käfig (5) festgehalten werden, außen berührt,
**dadurch gekennzeichnet, dass** das geschlungene Band (10) um eine äußere Umfangsseite der ersten Randabschnitte (21) oder der zweiten Randabschnitte (22) der Käfigteilstücke (6) gewunden wird, die ringförmig entlang der äußeren Peripherie des Innenrings (3) angeordnet sind, und mit Hilfe des Arretierungsabschnitts (11) eine Schlaufenlänge des Bands (10) hinsichtlich einer äußeren Umfangslänge der ersten Randabschnitte (21) oder der zweiten Randabschnitte (22) angepasst wird und die angepasste Schlaufenlänge fixiert wird.

6. Verfahren zum Zusammensetzen des Wälzlagers gemäß Anspruch 5, wobei das Band (10) eine Vielzahl an gürtelförmigen, umlaufend angeordneten Bandteilstücken (16, 17) umfasst, und die Bandteilstücke (16, 17) umlaufend aneinandergrenzend durch ein Verbindungsteil (18) verbunden sind, und wobei, nachdem der Außenring (2) mit den Wälzlagern (4) außen in Kontakt gebracht ist, das Verbindungsteil (18) von den Bandteilstücken (16, 17) entfernt wird, um das Band (10) von dem geteilten Käfig (5) zu entfernen.

7. Verwendung einer Montagevorrichtung gemäß Anspruch 1 zum Zusammensetzen eines geteilten Käfigs (5).

## Revendications

1. Gabarit pour assembler une cage fendue (5) de type à support externe, la cage fendue ayant une pluralité de segments de cage (6), dans lequel chacun des segments de cage comprend une partie de rebord (21, 22),
**caractérisé en ce que** le gabarit comprend
une bande en boucle (10) destinée à être enroulée sur un côté périphérique externe de la partie de rebord (21, 22) des segments de cage (6) qui sont agencés de manière annulaire, dans lequel
la bande en boucle (10) comprend :
une partie de verrouillage (11) qui est capable d'ajuster une longueur de boucle de la bande (10) par rapport à une longueur périphérique externe de la partie de rebord (21, 22) et qui est capable de fixer la longueur de boucle ajustée ;
une pluralité de segments de bande en forme de courroie (16, 17) qui est agencée de manière circonférentielle, et
un élément de raccordement (18) qui est capable de raccorder les segments de bande (16, 17) circonférentiellement adjacents les uns par rapport aux autres, et qui est amovible des segments de bande.

2. Gabarit avec une cage fendue (5) de type à support externe qui est configuré en agençant de manière annulaire une pluralité de segments de cage (6) dans une direction circonférentielle,
dans lequel chacun des segments de bande (6) comprend
une paire de première (21) et seconde (22) parties de rebord espacées l'une de l'autre par un intervalle prédéterminé et se faisant face, et
une pluralité de parties de barre (23) s'étendant à partir de la première partie de rebord (21) jusqu'à la seconde partie de rebord (22), dans lequel des espaces, dont chacun est entouré par les parties de barre (23) adjacentes les unes par rapport aux autres, et la paire de première (21) et seconde (22) parties de rebord, sont formés comme des poches qui logent des éléments roulants (4) et dans lequel la cage fendue (5) limite le mouvement radialement vers l'extérieur des éléments roulants (4) logés dans les poches,
**caractérisé en ce que** le gabarit comprend
une bande en boucle (10) enroulée sur un côté périphérique externe des premières parties de rebord (21) ou des secondes parties de rebord (22) des segments de cage (6) qui sont agencés de manière annulaire,
dans lequel la bande (10) comprend une partie de verrouillage (11) qui est capable d'ajuster une longueur de la bande (10) par rapport à une longueur périphérique externe des premières parties de rebord (21) ou des secondes parties de rebord et qui est capable de fixer la longueur de boucle ajustée.

3. Gabarit avec une cage fendue selon la revendication 2, dans lequel la bande (10) comprend en outre une pluralité de segments de bande en forme de courroie (16, 17) qui est agencée de manière circonférentielle, et un élément de raccordement (18) qui est capable de raccorder les segments de bande (16, 17) circonférentiellement adjacents les uns par rapport aux autres, et qui est amovible des segments de bande.

4. Gabarit avec une cage fendue (5) selon la revendication 2 ou 3, dans lequel les premières parties de rebord (21) ont un diamètre plus grand que celui des secondes parties de rebord (22), les premières parties de rebord (21) ont une surface périphérique externe qui est une surface conique dont le diamètre diminue vers les secondes parties de rebord (22), la cage fendue (5) est prévue pour retenir les éléments roulants (4) composés de rouleaux progressivement rétrécis (4) et la bande (10) est enroulée uniquement sur un côté périphérique externe des premières parties de rebord (21).

5. Procédé pour assembler un palier à roulement (1) comprenant une bague interne (3), une bague externe (2), une pluralité d'éléments roulants (4) intercalés entre la bague interne (3) et la bague externe (2) et une cage qui retient les éléments roulants (4), dans lequel la cage est composée d'une cage fendue (5) de type à support externe qui est configurée en agençant de manière annulaire une pluralité de segments de cage (6) dans une direction circonférentielle, dans lequel chacun des segments de cage (6) comprend une paire de première (21) et seconde (22) parties de rebord espacées l'une de l'autre par un intervalle prédéterminé et se faisant face, et une pluralité de parties de barre (23) s'étendant à partir de la première partie de rebord (21) jusqu'à la seconde partie de rebord (22), dans lequel des espaces, dont chacun est entouré par les parties de barre (23) adjacentes les unes par rapport aux autres et la paire de première (21) et seconde (22) parties de rebord, sont formés comme des poches qui logent les éléments roulants (4) et dans lequel la cage fendue (5) limite le mouvement radialement vers l'extérieur des éléments roulants (4) logés dans les poches, le procédé comprenant les étapes consistant à :
retenir les éléments roulants (4) agencés sur un côté périphérique externe de la bague interne (3), en utilisant la cage fendue (5) dans laquelle les segments de cage (6) sont agencés de manière annulaire le long d'une périphérie externe de la bague interne (3) et empêchant la séparation des segments de cage (6) de la cage fendue (5) les uns des autres, en utilisant une bande en boucle (10) comprenant une partie de verrouillage (11) ; et
amener la bague externe (2) à entrer en contact extérieurement avec les éléments roulants (4) retenus par la cage fendue (5),
**caractérisé en ce que** la bande en boucle (10) est enroulée sur un côté périphérique externe des premières parties de rebord (21) ou des secondes parties de rebord (22) des segments de cage (6) agencés de manière annulaire le long de la périphérie externe de la bague interne (3) et au moyen de la partie de verrouillage (11), une longueur de boucle de la bande (10) est ajustée par rapport à une longueur périphérique externe des premières parties de rebord (21) ou des secondes parties de rebord et la longueur de boucle ajustée est fixée.

6. Procédé pour assembler le palier à roulement selon la revendication 5, dans lequel la bande (10) comprend une pluralité de segments de bande en forme de courroie (16, 17) qui est agencée de manière circonférentielle et les segments de bande (16, 17) circonférentiellement adjacents les uns aux autres sont raccordés par un élément de raccordement (18), et dans lequel après que la bague externe (2) a été amenée à entrer en contact extérieurement avec les éléments roulants (4), l'élément de raccordement est retiré des segments de bande (16, 17) afin de retirer la bande (10) de la cage fendue (5).

7. Utilisation d'un gabarit selon la revendication 1 pour assembler une cage fendue (5).
